# EUROPEAN PATENT SPECIFICATION

(11) **EP 2 928 697 B1**
(45) Date of publication and mention of the grant of the patent: **05.12.2018**
(21) Application number: 13779883.1
(22) Date of filing: 23.10.2013
(51) Int. Cl.: B42D 15/00

(54) **NON-PERIODIC TILING DOCUMENT SECURITY ELEMENT**
NICHTPERIODISCHE KACHELUNG EINES DOKUMENTENSICHERHEITSELEMENTS
ÉLÉMENT DE SÉCURITÉ POUR DOCUMENT DE CARRELAGE NON PÉRIODIQUE

(30) Priority: 07.12.2012 EP 12196020
(43) Date of publication of application: 14.10.2015
(73) Proprietor: SICPA HOLDING SA, 1008 Prilly (CH)
(72) Inventor: MÜLLER, Edgar, CH-1012 Lausanne (CH)
(74) Representative: Hepp Wenger Ryffel AG
(86) International application number: PCT/EP2013/072148
(87) International publication number: WO 2014/086531

(56) References cited:
- WO-A1-2008/017864
- WO-A2-02/101669
- US-A1- 2005 179 955

## Description

### FIELD OF THE INVENTION

The present invention relates to the field of document security and concerns a security element for the counterfeit-protection of documents and articles, as well as a method to produce said security element.

### BACKGROUND OF THE INVENTION

Value documents, such as banknotes, are frequent counterfeiting targets, i.e. the counterfeiter tries to reproduce the original document and to bring the reproduction in circulation, hereby earning its nominal value. Identity documents and right-conferring documents such as credit cards, access cards or public transportation titles are frequent objects of tampering, i.e. the counterfeiter, who has stolen the document from its regular owner, tries to replace the personalization information of the regular owner by its own, in the aim to use the benefits conferred by the document.

With the aim of preventing the counterfeiting of value documents or the tampering of identity- and right-conferring documents, it has been the conventional practice to protect sensitive information and/or incorporate various security means in these documents.

Typical examples of security means include security threads or stripes, windows, fibers, planchettes, foils, decals, holograms, watermarks, security inks comprising optically variable pigments, magnetic or magnetizable thin film interference pigments, interference-coated particles, thermochromic pigments, photochromic pigments, luminescent, infrared-absorbing, ultraviolet-absorbing or magnetic compounds. In addition to those security means, intaglio printing processes using engraved plates combining coarse- and fine-line engravings and variable engraving depth are used in the field of security documents, in particular banknotes.

Security document comprising sensitive information, such as for example the personalization, may be protected by printing the sensitive information with an ink comprising a particular security material, such as a luminescent, an IR-absorbing or a magnetic compound. The authenticity of the sensitive information can then be checked by examining the document for the presence of said security material. Such checking can also be performed on a machine, using a corresponding authenticating device, such as e.g. a UV-lamp with luminescence detector, an IR-camera, or a magnetic reader device.

It has also been proposed to under-print or over-print parts or portion of security document which are destined to receive sensitive personalization information with a pattern or with indicia indicating the authenticity of the respective field and of the sensitive information contained in it.

For example, the genuine fields of bank checks destined to receive the name and/or signature of the titular of the check and/or the amount of money to be paid are pre-imprinted with a pattern of bleeding ink. Any attempt to substitute the genuine information by any other information requires the genuine information to be removed or deleted, by rubbing or by chemical treatment, said treatment irremediably resulting in the destruction, deterioration, the smearing or bleeding out of the under-printed pattern, and thus reveal the tampering attempt. The bank in charge will correspondingly detect the fraud and not pay out the check.

Alternatively, the sensitive personalization information of identity documents may be overprinted with a varnish comprising a particular security material such as a luminescent compound, or the corresponding zone on the document is over-laminated with a security foil. An attempt to substitute the sensitive information on such protected document requires the removal and re-application of the said varnish or the said security foil, which is likely to result in visible traces on the document, revealing thus the tampering attempt upon a visual inspection. However, such a tampering, which is normally easily evidenced by visual inspection, may escape machine inspection by cameras, e.g. such as are used for passport authentication at automated check-in terminals of airports, by the simple reason that machine inspection requires a security element which can be checked with the help of some underpinning algorithm such as to yield a clear-cut true/false result. There is currently a lack in this domain.

An example of a conventional security element requiring visual inspection is provided in US_A1-2005-0179955, for instance.

A need remains for improved security elements, in particular machine readable security elements, that are suited for evidencing tampering attempts on security documents.

### SUMMARY

It has been surprisingly found that the above mentioned problems can be overcome by a security element or device and a method for revealing or authenticating the tampering of sensitive information on personalized security documents.

Described and claimed herein are security elements comprising, as an authentication and forgery-protection means, a 2-dimensional non-periodic, quasi-crystalline tiling, said tiling being embodied in the form of a material or a material modification in or on said element, wherein the term "quasi-crystalline" means that the 2-dimensional tiling has internal symmetry elements, such as rotational symmetry and/or mirror symmetry, but lacks translational symmetry, i.e. that it is non-periodic at least along one dimension.

Also described and claimed therein are uses of the security element described herein as an authentication and forgery-protection means for a document.

Also described and claimed therein are documents, in particular value documents or value commercial goods, comprising the security element described herein.

Also described and claimed therein are methods for protecting a document against forgery, said methods comprising a step of embodying a 2-dimensional non-periodic, quasi-crystalline tiling, in the form of a material or a material modification in or on said security element comprised by said document.

### Brief description of the drawings

The invention can be explained with the help of the following figures:
- **Fig. 1**: exemplifies the principle of a non-commensurate projection of a 2-dimensional square lattice (G, base vectors u, v) onto a line (z). The resulting linear tiling of distances (a, b) is non-periodic, but quasi-crystalline.
- **Fig. 2a**: shows a tiling in a plane, such as resulting from a periodic projection along the body-diagonal of a 3-dimensional cubic lattice
- **Fig. 2b**: shows a tiling in a plane, such as resulting from a general, non-periodic projection of a 3-dimensional cubic lattice.
- **Fig. 3**: shows a tiling in a plane, such as resulting from the projection of a 4-dimensional hyper-cubic lattice (Amman-Beenker tiling).
- **Fig. 4**: shows a tiling in a plane, such as resulting from the projection of a 5-dimensional hyper-cubic lattice onto a plane orthogonal to the lattice's body diagonal (Penrose tiling).
- **Fig. 5**: shows the Fourier Transform of the Penrose tiling of Fig. 4.
- **Fig. 6a**: shows a Kepler tiling, related to the Penrose tiling and obtained from it by the modification of tiles, respecting the original symmetry.
- **Fig. 6b**: shows a Kepler-Penrose tiling, related to the Penrose tiling and obtained from it by the modification of tiles, respecting the original symmetry.
- **Fig. 6c**: illustrates the equivalence of the original tiling proposed by Roger Penrose (black lines) with the "Kite" and "Diamond" Penrose tiling.
- **Fig. 7**: shows a tiling in a plane, such as resulting from the projection of a 6-dimensional hyper-cubic lattice onto a plane, wherein the tiles are colored according to the projection series.
- **Fig. 8**: shows a tiling in a plane, such as resulting from the projection of a 9-dimensional hyper-cubic lattice onto a plane, illustrating the complexity which is obtainable in a tiling projected from higher dimension.
- **Fig. 9a**: schematically shows a banknote overprinted with an invisible, IR-luminescent Penrose tiling;
- **Fig. 9b**: shows the luminescence response of said Penrose tiling of Fig. 9a under excitation of said IR-luminescent.
- **Fig. 10**: shows the Fourier Transform of the IR-luminescent Penrose tiling of the banknote shown in Fig. 9a.
- **Fig. 11**: schematically shows a bank check having two sensible information fields overprinted with a non-periodic Ammann-Beenker tiling.

### DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the term "and/or" means that either all or only one of the elements of said group may be present. For example, "A and/or B" shall mean "only A, or only B, or both A and B".

As used herein, the term "about" means that the amount or value in question may be the value designated or some other value about the same. The phrase is intended to convey that similar values within a range of ±5% of the indicated value promote equivalent results or effects according to the invention.

As used herein, the expression "2-dimensional tiling" refers to any planar, surface-filling disposition of one or more types of surface elements of determined size and shape. In the context of the present work, such surface elements are also called tiles.

As used herein, the expression "non-periodic tiling" refers to a tiling which has no periodic repetition of tiles along at least one direction in the plane of the tiling.

As used herein, the term "quasi-crystalline" means that the 2-dimensional tiling has internal symmetry elements, such as rotational symmetry and/or mirror symmetry, but lacks translational symmetry, i.e. that it is non-periodic at least along one dimension. Quasicrystals occur in nature, as first described by D. Shechtman et al., Phys. Rev. Lett. 53, 1951, (1984).

Described herein are security elements comprising, as an authentication and/or forgery-protection means, a 2-dimensional non-periodic, quasi-crystalline tiling implemented in or on at least part of the security element's surface, said tiling being embodied in the form of a material or a material modification in or on said security element.

According to one embodiment, the tiling is embodied in the form of a material in or on said security element, said material being preferably a layer made of an ink or a coating composition on the element.

The ink or coating composition suitable for the present invention preferably comprises a binder and one or more components selected the group consisting of UV-, visible- and IR-absorbing materials; UV-, visible- and IR-luminescent materials; ferromagnetic materials, ferrimagnetic materials and combinations thereof. Said one or more components may be embodied as pigments, dyes or as any shaped material. Preferably, the one or more components described herein are security components used in the art for overt and covert document security marking purposes. Security features can be classified into "covert" security features and "overt" security features. The protection provided by covert security features relies on the concept that such features are difficult to detect, typically requiring specialized equipment and knowledge for detection, "overt" security features rely on the concept of being easily detectable with the unaided human senses, e.g. such features may be visible and/or detectable via the tactile sense, while still being difficult to produce and/or to copy.

The ink or coating composition described herein is hardened or cured so as to form a solid layer. As known to those skilled in the art, ingredients comprised in an ink or coating composition to be applied onto a substrate and the physical properties of said composition are determined by the nature of the process used to transfer the composition to the surface of a substrate. Consequently, the binder comprised in the an ink or coating composition described herein is typically chosen among those known in the art and depends on the coating or printing process used to apply the composition and the chosen curing process. The term "curing" or "curable" refers to processes including the hardening, drying or solidifying, reacting or polymerization of the applied composition in such a manner that it can no longer be removed from the surface onto which it is applied. Preferably, the ink or coating compositions described herein are applied by a printing process selected from the group consisting of offset-printing, gravure-printing, silkscreen-printing, copperplate intaglio printing, letterpress printing, roller-coating, ink-jet printing and combinations thereof.

The ink or coating compositions described herein are preferably selected from the group consisting of radiation curable compositions, thermal drying compositions or any combination thereof. Thermal drying compositions are selected from the group consisting of compositions of any type of aqueous compositions or solvent-based compositions which are dried by hot air, infrared or by a combination of hot air and infrared. Radiation curable compositions are selected from the group consisting of compositions that may be cured by UV-visible light radiation (hereafter referred as UV-Vis-curable) or by E-beam radiation (hereafter referred as EB). Radiation curable compositions are known in the art and can be found in standard textbooks such as the series "Chemistry & Technology of UV & EB Formulation for Coatings, Inks & Paints", published in 7 volumes in 1997-1998 by John Wiley & Sons in association with SITA Technology Limited.

UV-, visible- and IR-absorbing materials are compounds having specific absorption in a particular wavelength range of the electromagnetic spectrum, such as UV, visible and IR-absorbing compounds. The infrared, visible and UV portions of the electromagnetic spectrum approximately correspond to the wavelength ranges between 700-2500 nm, 400-700 nm, and 200-400 nm respectively. IR absorbing compounds include IR absorbing inorganic compounds, glasses comprising substantial amounts of IR-absorbing atoms or ions or entities which display IR-absorption as a cooperative effect, IR absorbing organic compounds and IR absorbing organometallic compounds (complexes of cation(s) with organic ligand(s), wherein either the separate cation and/or the separate ligand, or both in conjunction, have IR-absorbing properties). Typical examples of IR absorbing compounds include among others carbon black, quinone-diimmonium or aminium salts, polymethines (e.g. cyanines, squaraines, croconaines), phthalocyanine or naphthalocyanine type (IR-absorbing pi-system), dithiolenes, quaterrylene diimides, metal (e.g. transition metals or lanthanides) phosphates, lanthanum hexaboride, indium tin oxide, antimony tin oxide in nano-particulate form and doped tin(IV) oxide (cooperative property of the SnO₄ crystal). IR absorbing compounds also includes ytterbium compounds such as ytterbium phosphate (YbPO₄), ytterbium vanadate (YbVO₄), or another ytterbium (3+) ions containing oxide, glass or organic compound. Ytterbium (3+) ions noteworthy have no coloring properties in the visible spectral range of 400 to 700 nm wavelength, and exhibit a relatively narrow absorption band between 900 and 1000 nm wavelength, i.e. in a spectral region where most of the known organic coloring materials do not absorb. This provides the coating with the advantage of being applicable to a document, in particular a value document or value commercial goods, without interfering with printed visible features or other security elements present on the document. Light emitting diodes (LEDs) which provide specific illumination in the wavelength range around 950 nm are commercially available, and the sensitivity range of the common, silicon-based photodetector arrays extends up to 1'100 nm wavelength. This provides technology for the selective reading of the printed IR-absorbing feature on the document.

The ink or coating compositions described herein may also comprise one or more UV-, visible-, or IR-luminescent compounds. Such luminescent compounds preferably have a weak own body color in the visible (400 to 700 nm) domain, such that it does not interfere with the visual perception of the printed document. UV-, visible- and IR-luminescent luminescent may be inorganic (inorganic host crystals or glasses doped with luminescent ions), organic or organometallic (complexes of luminescent ion(s) with organic ligand(s)) substances. Luminescent compounds can absorb certain types of energy acting upon them and subsequently emit at least partially this absorbed energy as electromagnetic radiation. Luminescent compounds are detected by exposing with a certain wavelength of light and analyzing the emitted light. Down-converting luminescent compounds absorb electromagnetic radiation at a higher frequency (shorter wavelength) and at least partially re-emit it at a lower frequency (longer wavelength). Up-converting luminescent compounds absorb electromagnetic radiation at a lower frequency and at least partially re-emit part of it at a higher frequency. Light emission of luminescent materials arises from excited states in atoms or molecules. The radiative decay of such excited states has a characteristic decay time, which depends on the material and can range from 10⁻⁹ seconds up to various hours. Both fluorescent and phosphorescent compounds are suitable for the realization of machine-readable feature. In the case of phosphorescent compounds, measurement of decay characteristics may also be carried out and used as a machine-readable feature. Luminescent compounds in pigment form have been widely used in inks (see US- 6 565 770, WO 2008/033059 A2 and WO 2008/092522 A1). The luminescent material has preferably a weak own body color in the visible (400 to 700 nm) domain, such that it does not interfere with the visual perception of the printed document. Examples of luminescent compounds include without limitation optical brighteners, fluoresceines, rhodamines, or molecules containing the perylene moiety, etc. (for this aspect see WO 03/101755 incorporated herein by reference), complexes of a luminescent rare-earth activator ion such as Pr³⁺, Nd³⁺, Sm³⁺, Eu³⁺, Tb³⁺, Gd³⁺, Dy³⁺, Ho³⁺, Er³⁺, Tm³⁺, Yb³⁺ with suitable organic ligands, host crystal material in pigment form, such as ZnO, ZnS, Al₂O₃, YPO₄, YVO₄, Y₂O₂S, Y₃Al₅O₁₂ etc., which is doped with one or more activator ions selected from the transition-element ions, such as Cu⁺, Ag⁺, Cr³⁺, Ti³⁺, etc., and/or from the rare-earth-element ions, such as Pr³⁺, Nd³⁺, Sm³⁺, Eu³⁺, Tb³⁺, Gd³⁺, Dy³⁺, Ho³⁺, Er³⁺, Tm³⁺, Yb³⁺, rare earth oxysulfides and rare-earth metal complexes such as those described in WO 2009/005733 A2 or in US-7 108 742. Examples of inorganic compounds materials include without limitation La₂O₂S:Eu, ZnSiO₄:Mn, and YVO₄:Nd. Corresponding reader devices have a light source for exciting the luminescent's emission, and a reader unit which is sensitive for the luminescent's emitted radiation. The reader unit may preferably comprise a 2-dimensional focal plane camera (silicon CMOS or CCD), or a 1-dimensional line-scan camera.

Ferromagnetic or ferrimagnetic materials include without limitation soft-magnetic pigments (coercivity lower than or equal to 1000 A/m) and hard-magnetic pigments (coercivity higher than 1000 A/m).

Preferably, the one or more components described herein are machine readable substances. As used herein, the term "machine readable substances" refers to substances which exhibit at least one distinctive property which is not perceptible by the naked eye, and which can be admixed to or comprised in an ink or composition so as to confer a way to distinguish or authenticate said ink/composition comprising said ink/composition by the use of a particular equipment.

The ink or coating compositions described herein may further comprise one or more additives including without limitation interference particles, in particular optically variable pigments, electrically conducting compounds, taggants and/or forensic markers, compounds and materials which are used for adjusting physical, rheological and chemical parameters of the composition such as the viscosity (e.g. solvents and surfactants), the consistency (e.g. anti-settling agents, fillers and plasticizers), the foaming properties (e.g. antifoaming agents), the lubricating properties (waxes), UV stability (photosensitizers and photostabilizers) and adhesion properties, etc. Additives described herein may be present in the optically variable compositions disclosed herein in amounts and in forms known in the art, including in the form of so-called nano-materials where at least one of the dimensions of the particles is in the range of 1 to 1000 nm.

The ink or coating composition suitable for the present invention may be prepared by dispersing or mixing the above described components selected the group consisting of UV-, visible-, and IR-absorbing materials; UV-, visible-, and IR-luminescent luminescent materials; ferromagnetic materials, ferrimagnetic materials and combinations thereof and optionally one or more additives in with the binder described herein, thus forming liquid inks. Optionally, one or more photoinitiators may be added to the composition either during the dispersing or mixing step of all other ingredients or else they may be added at a later stage, i.e. after the formation of the liquid inks.

According to one embodiment, the tiling is embodied in the form of a material modification in or on said security element. The material modification in or on said security element described herein may be any local change of material properties and is preferably selected from the group consisting of thickness variations, transparency variations, laser markings, laser perforations and combinations thereof.

The present invention further provides the use of the security element described herein as an authentication and forgery-protection means for a document.

The present invention further provides documents comprising the security element described herein. Preferably, the documents according to the present invention are security documents. Security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, driving licenses, bank cards, credit cards, transactions cards, access documents or cards, entrance tickets, public transportation tickets or titles and the like. The term "value commercial good" refers to packaging material, in particular for pharmaceutical, cosmetics, electronics or food industry that may be protected against counterfeiting and/or illegal reproduction in order to warrant the content of the packaging like for instance genuine drugs. Example of these packaging material include without limitation labels such as authentication brand labels, tamper evidence labels and seals. Preferably, the document according to the present invention is personalized or user-specified, i.e. the document according to the present invention comprises sensitive or personalization information, and is selected from the group consisting of banknotes, identity documents, driving licenses, credit cards, access cards, public transportation titles and bank checks.

The sensitive or personalization information may be e.g. biometric and/or other identity information, such as a photograph, a fingerprint or a signature; a right conferred, such as a license to drive a particular vehicle or to enter a particular building, a validity date or period, such as the expiry of a public transportation title, an amount of money, such as currency denomination, a titular of a title, such as the recipient of a check, *etc.*

The 2-dimensional, non-periodic, quasi-crystalline tiling described herein is present in or on the security element comprised by the document, preferably at or over one or more locations carrying said sensitive personalization information. Alternatively, said sensitive personalization information may be modulated, i.e. caused to locally vary, with a 2-dimensional, non-periodic, quasi-crystalline tiling pattern. In the context of the present invention, the term "modulated" means more particularly that the 2-dimensional, non-periodic, quasi-crystalline tiling information is incorporated into said personalization information, and that the therewith modified personalization information is applied onto the security document.

According to one embodiment, the security element comprising the 2-dimensional non-periodic, quasi-crystalline tiling described herein is printed onto the document as a base layer, either at the end of the substrate production (e.g. papermaking process), or as a background at the beginning of the imprinting of the document. The applied, preferably printed, base layer is useful to authenticate the substrate of the document as being the correct one. The presence of the 2-dimensional non-periodic, quasi-crystalline tiling described herein as a base layer applied, preferably printed, onto the document may also serve to tamper-protect user-information fields on checks, such as the fields where the titular and the amount of money are to be filled in. Removal of the sensible information in those fields will manifest in a partial or total loss of the tiling, revealing thus the tampering.

According to one embodiment, the security element comprising the 2-dimensional non-periodic, quasi-crystalline tiling described herein is applied, preferably printed, onto the document as an overprinted securing feature, in particular for protecting fields of the document containing personalization information. For example, such securing overprint can be applied by a screen-printing process onto banknotes, prior to the protection varnish, and is particularly useful for the rapid machine-identification of a genuine note, regardless of mechanical damages or soiling. The securing overprint can also be applied onto personalization information on a document such as a passport, an identity card or a personal public transportation title. Such overprinting is preferably done by an ink-jet printing method. In a similar way, filled-in checks may be secured by an ink-jet overprinting with a particular tiling pattern which authenticates the emitter. Still in a similar way, any type of printed confidential information may be secured by an ink-jet overprinting with such tiling pattern. Alternatively, the security element may be produced onto an auxiliary substrate such as for example a security thread, security stripe, a foil, a decal, a window or a label and consequently transferred to a value document or value commercial good in a separate step.

The present invention further provides a method for protecting a document, preferably a security document such as those described herein, against forgery comprises thus a step of embodying a 2-dimensional non-periodic, quasi-crystalline tiling, in the form of a material or a material modification in or on said security element comprised by said document.

Said security element comprising the 2-dimensional non-periodic, quasi-crystalline tiling is preferably applied to the document by the means of a printing process selected from the group consisting of offset-printing, gravure-printing, silkscreen-printing, copperplate intaglio printing, letterpress printing, roller-coating, ink-jet printing and combinations thereof. Depending on the printing process, a pre-press form of said 2-dimensional, non-periodic, quasi-crystalline tiling should first be prepared. Such pre-press form may e.g. be a printing plate for the engraved printing technology (intaglio, gravure, etc.), a printing plate for the flat (offset) printing technology, a printing plate for the letterpress printing technology, or a printing screen for the screen-printing technology.

The quasi-crystalline tilings described herein have a discrete Fourier-Transform.. Mathematically, the quasi-crystalline structure can be explained as a projection of a regular, translation-symmetrical periodic lattice in a higher-dimensional space (hyperspace) onto a non-commensurately oriented slab of a lower-dimensional space (subspace) which is embedded in said higher-dimensional space. In the present context, the 2-dimensional, non-periodic, quasi-crystalline tiling is obtained by the projection, onto a non-commensurately oriented plane, of a regular, translation-symmetrical periodic lattice in a 3- or higher-dimensional space.

A non-commensurately oriented plane in the hyperspace is a plane, whose base vector system has no rational relationship with the base vector system of the hyperspace.

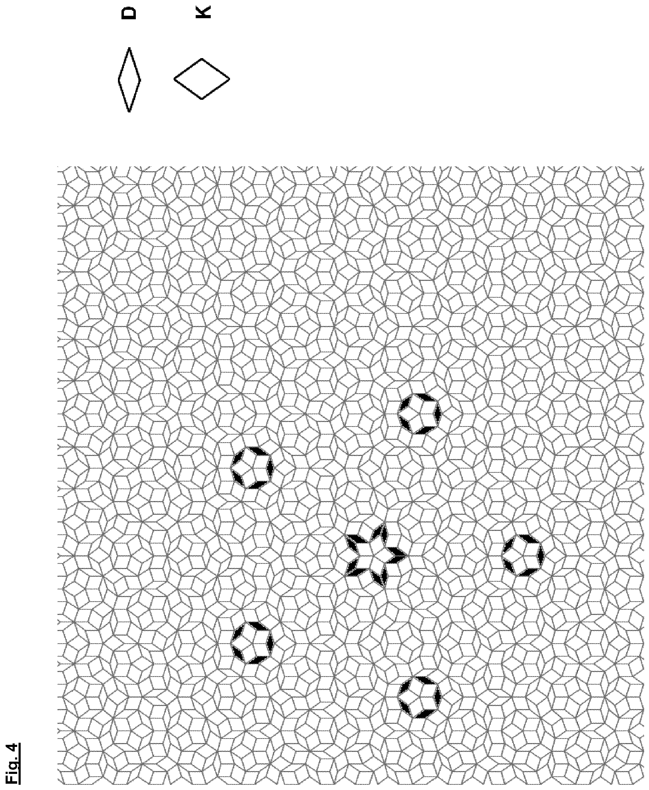

A 2-dimensional, non-periodic, quasi-crystalline tiling, such as the Penrose tiling of **Fig. 4**, has, apart from the fact that it is a highly aesthetic pattern, further interesting properties which makes it useful for the machine authentication of security documents, noteworthy a) it has a particular discrete 2-dimensional Fourier Transform; and b) it has no translational symmetry at least along one axis of the plane.

The 2-dimensional, non-periodic, quasi-crystalline tiling may, as already discussed, have one or more unrestricted rotational symmetries and/or further mirror symmetries.

A discrete 2-dimensional Fourier Transform, in the present context, means that the Fourier Transform only exists at certain, regularly disposed points in the plane and that it is zero elsewhere. In practice, the discrete Fourier Transform has a clear nonzero value in the vicinity of certain points, and is about zero elsewhere.

The existence, despite of the non-periodicity of the quasi-crystalline tiling, of a particular discrete Fourier Transform, which only exists at particular, regularly disposed locations in space, and which is zero elsewhere, can be used for providing machine authenticate-ability to a document carrying said tiling. The said Fourier Transform can be easily calculated from an image of the document through image-processing means, and is thus easily distinguished from the other parts of the document which do not yield a discrete Fourier Transform. The document can in this way be machine-authenticated by comparing its discrete Fourier Transform with the discrete Fourier Transform of a genuine document.

The present invention further provides a method for authenticating a document carrying a 2-dimensional non-periodic, quasi-crystalline tiling as an authenticating feature, comprising a step of calculating the Fourier Transform of an acquired image of said document or article and comparing the discrete parts of said Fourier Transform with the discrete Fourier Transform of a 2-dimensional non-periodic, quasi-crystalline tiling serving as the authenticating feature, hereby deriving an authenticity indication.

The authentication of such printed 2-dimensional non-periodic, quasi-crystalline tiling at the receiver of the document requires thus a scanner or an electronic camera having corresponding illuminating means, for acquiring an image of said document, and a particular image-processor capable to calculate the Fourier Transform of the image and to compare its discrete parts with those of an authentic specimen. Said image-processor is typically implemented as a computer program on commonly available text processing equipment. The comparison result is used as an authenticity indication.

The 2-dimensional non-periodic, quasi-crystalline tiling described herein can be produced by projecting a regular crystal lattice in a hyper-space of dimension higher than two onto a projection plane (2-dimensional sub-space) which is non-commensurate with the said crystal lattice in the hyper-space. Non-commensurate means that the equation of the projection plane cannot be expressed in integers of the base vectors of the said regular crystal lattice in the hyper-space.

The so-obtained primary tiling may then, respecting its symmetries, be further modified by subdividing tiles, uniting tiles, as well as making ornamental additions to tiles, such as inserting figures, indicia, or a specific coloring of the tiles.

The existence of a higher-dimensional regular crystal lattice, of which the tiling is a projection, correlates with the existence of a discrete Fourier Transform for the tiling.

The 2-dimensional tiling can be generated, i.e. projected out, using a computer program. Choosing an appropriate crystal lattice in an appropriate high-dimensional space (hyperspace) and an appropriate projection plane which is non-commensurate with the said crystal lattice, the projected tiling can be extremely complex and irregular, but still have a discrete Fourier Transform.

In particular, a regular crystal lattice in n-dimensional space is defined by n base vectors, each having n components; the base vectors, in general, may have different lengths and need not to be orthogonal to each other.

The particular case of a cubic crystal lattice in n-dimensional space is characterized by n base vectors of a same, unique length, which are mutually orthogonal to each other.

A general plane in n-dimensional space is defined by the equation P = P0 + u*P1 + v*P2. The vectors P, P0, P1, and P2 have generally n components; P0 is the origin, and P1 and P2 form an ortho-normal base of the plane P. The scalar coordinates u and v define a point within the plane P.

The locations on the security document which comprise said 2-dimensional non-periodic, quasi-crystalline tiling can further be machine-searched and displayed with the help of an image correlation algorithm. The image of the document is to this aim correlated, via Fourier Transform methods known to the skilled person, with an authentic sample of the 2-dimensional tiling. The resulting correlation signal is strong at the locations on the image where the tiling is effectively present. This is particularly useful for detecting zones on the document where tampering might have occurred.

The absence of translational symmetry in the 2-dimensional non-periodic, quasi-crystalline tiling is a subtle means to prevent the easy replication of the tiling. In fact, a missing part in the tiling, as results from the tampering of sensitive information which was overprinted with said tiling, cannot be simply substituted by translating an adjacent, still intact part of the tiling; in contrary, the missing tiling can only be correctly reconstructed by projecting it out from the original, multidimensional regular crystal lattice onto the original projection plane which is non-commensurate with the said crystal lattice.

Although the present disclosure, for the sake of simplicity, is merely illustrated with 2-dimensional projections of cubic lattices of dimensions higher than two, the generalization to non-cubic lattices in n-dimensional hyper-space, having n base vectors of different lengths and mutual angles between said base vectors of arbitrary values, is straightforward to the skilled person, and the corresponding embodiments are also part of the present disclosure.

To assure a maximum protection of the document, the original regular crystal lattice is preferably defined in a rather high-dimensional space and has preferably a low internal symmetry. Non-cubic lattices in hyperspace are the preferred option for document-security applications according to the present work. Such embodiments may result in an extremely complex 2-dimensional tiling pattern, which, however, has still a discrete Fourier Transform.

### Examples

In the following, the present invention is further described with the aid of non-limiting examples and drawings. A 2-dimensional non-periodic, quasi-crystalline tiling may be obtained by projecting a higher-dimensional regular crystal lattice (hyper-lattice) onto a projection plane (physical space) which is non-commensurate with the base vectors of the said higher-dimensional crystal lattice. Non-commensurate means that the equation of the projection plane cannot be expressed in integers of the base vectors of the crystal lattice.

The hyper-lattice projection is based on the theory given by N.G. deBruijn, "Algebraic theory of Penrose's nonperiodic tilings of the plane, I, II", Nederl. Akad. Wetensch. Indag. Math. 43 (1981) 39-52, 53-66, as well as on Marjorie Senechal's book, "Quasicrystals and geometry", Cambridge UP 1995. The tilings given hereafter were obtained using Eugenio Durand's, "QuasiTiler" program, The Geometry Center, University of Minnesota, 1994; which is also described in M. Senechal's book and distributed under the terms of the GNU General Public License.

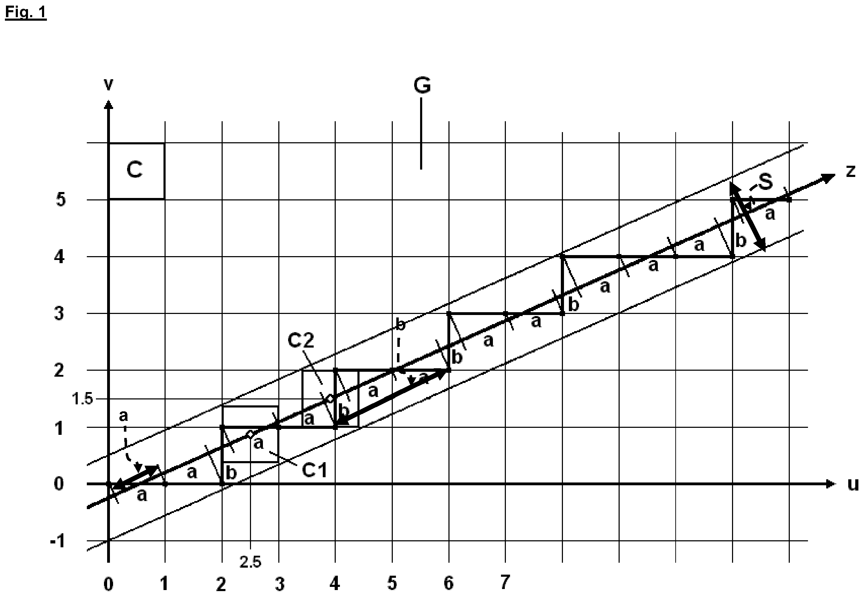

With reference to **Fig. 1**, the principle of the hyper-lattice projection is explained at the example of a 2-dimensional square hyper-lattice (G), having a unit cell (C) with base vectors (u, v), which is projected onto a 1-dimensional line (z) as the chosen subspace. It is sufficient to consider the grid points marked in bold, which are comprised in a strip (S) parallel to the line (z) and one unit cell large; all other grid points are related by the lattice translation symmetry to the grid points in strip (S). Each grid point comprised in the lattice strip (S) is projected onto the line (z).

The unit cell (C) of the square hyper-lattice (G) yields, upon projection onto the line (z), a long (a) and a short (b) projected distance, hereafter called "a"-segment and "b"-segment, respectively, which together define a **linear tiling** obtained on the line (z) figuring as the subspace. As evidenced by **Fig. 1**, the alternation of projected distances (a) and (b) on the line (z) forms a sequence which depends on the inclination of the line (z) with respect to the grid (G). The sequence of distances (a, b) is periodic if the inclination of the line (z) is an integer ratio of base vectors (u, v) of the grid (G); otherwise, if the line (z) is non-commensurate with the base vectors of the grid (G), the sequence of distances (a, b) is non-periodic. The resulting linear tiling of distances (a, b) has, however, always a discrete Fourier Transform, because it is a projection of the regular crystal lattice (G).

The complete linear tiling of distances (a, b) on the line (z) is obtained by a simple displacement of the center of a unit cell (C) of the square hyper-lattice (G) along the line (z) representing the subspace. Each time a complete vertex, i.e. two adjacent lattice points, of the square hyper-lattice (G) falls within the displaced unit cell (C), a projection of said vertex onto the line (z) is obtained.

Two cases may arise: 1) a vertex along the base vector u of the square hyper-lattice (G) falls within the displaced unit cell (C1), then the unit cell's center is at an odd-half-integer u-coordinate (2.5 in **Fig. 1**), whereas its v-coordinate is free, and an "a"-segment projection is obtained; or 2) a vertex along the base vector v of the square hyper-lattice (G) falls within the displaced unit cell (C2), then the unit cell's center is at an odd-half-integer v-coordinate (1.5 in **Fig. 1**), whereas its u-coordinate is free, and an "b"-segment projection is obtained.

Scanning a unit-cell-wide strip of the hyper-lattice at all odd-half-integer values of each of the hyper-lattice's base vectors along the line (z) as the chosen sub-space is therefore a recipe for obtaining the complete tiling of the line (z). In practice, the scanning is performed by calculating, from the hyper-space equation of the line (z), representing the subspace, all values of v-coordinates corresponding to odd-half-integer u-coordinates and projecting out the "a"-segments, and all values of u-coordinates corresponding to odd-half-integer v-coordinates and projecting out the "b"-segments.

Projecting out an "a"- or a "b"-segment is done by projecting out the two lattice points which define the segment; a projection of a lattice point onto a line comes down to evaluating the scalar product between the vector defining the lattice point and the vector defining the line, taking into account the line's origin.

Given that the segments so identified form an uninterrupted "staircase", a contiguous tiling on the line (z) is obtained, by projecting all "kinks" of the "staircase", i.e. all lattice points identified as forming a vertex within strip (S), onto the line (z). Said projection is obtained by forming the scalar product (inner product) between the lattice point and the unit vector along (z) in the hyper-space, as known to the skilled person.

The projection of a three-dimensional cubic hyper-lattice onto a line (z = P0 + u*P1) as the sub-space results in a corresponding tiling of the line (z) by a periodic or non-periodic sequence of three projected distances (a, b, c) in the general case. The "staircase" is in this case a 3-dimensional path through the cubic hyper-lattice, along the line (z) acting as the subspace.

Please note, however, that now, the points defining the 3-dimensional staircase are no longer confined in a strip, but rather in a 3-dimensional "cylinder" around the line (z), resulting from parallel-shifting one unit cell centered on the line (z) along the unit vector (P1) defining the line (z). Finding first the lattice points inside said "cylinder", and connecting all neighboring lattice points within said "cylinder", yields the 3-dimensional staircase.

The principles outlined in **Fig. 1** can be generalized to the case of a projection of a lattice from a higher-dimensional space (hyper-space) onto a plane (P) as the subspace, resulting in a tiling of the plane (P). We are now looking first for those points of the hyper-lattice which are located within the "hyper-cylinder" resulting from parallel-shifting one unit cell centered on the plane (P) along the unit vectors (P1, P2) defining the plane (P). Then we look for those squares of adjacent lattice points which lie inside said "hyper-cylinder". Projecting out onto the plane (P) all squares formed by four adjacent lattice points inside said "hyper-cylinder" yields the non-periodic tiling of the plane (P).

In mathematical detail, the method for obtaining a non-periodic tiling as the projection of a lattice in an n-dimensional hyperspace onto a non-commensurate plane P = P0 + u*P1 + v*P2 in said hyperspace comprises the steps of:
a) determining the radius of the "hyper-cylinder" as the maximal normal distance (MND) from the plane (P) of all corners of a unit cell centered on said plane (P);
b) searching out all lattice points which are located inside said "hyper-cylinder", i.e. which have a normal distance (ND) to the plane (P) of less than the maximal normal distance (MND), and have projections (u, v) which fall inside a determined area on said plane (P);
c) projecting out onto said plane (P) all squares of four adjacent lattice points present among the points searched out in step b);
wherein the projection (u, v) of a n-dimensional hyper-lattice point H onto the plane P is obtained through the evaluation of the n-dimensional scalar products u = (H-P0)*P1; v = (H-P0)*P2; and the normal distance (ND) of point H to the plane (P) is obtained through the formula of Pythagoras: ND² = (H-P0)*(H-P0) - u² - v² in n-dimensional space.

In the case of the preferred non-cubic lattices in n-dimensional hyper-space, having n base vectors of different lengths and mutual angles between said base vectors of arbitrary values, the unit cell of the lattice is delimited by parallelograms. In such case, said parallelograms are projected out onto the plane (P), taking into account the particular metric of the non-cubic lattice in hyper-space, as known to the skilled in the art.

The number of different projections of squares or parallelograms in the tiling depends on the dimension of the chosen hyper-space. In fact, the number of different series of projections of squares obtained corresponds to the possible scanning directions and is given by the combinatorial formula n*(n-1)/2, wherein n is the dimension of the lattice in the hyper-space.

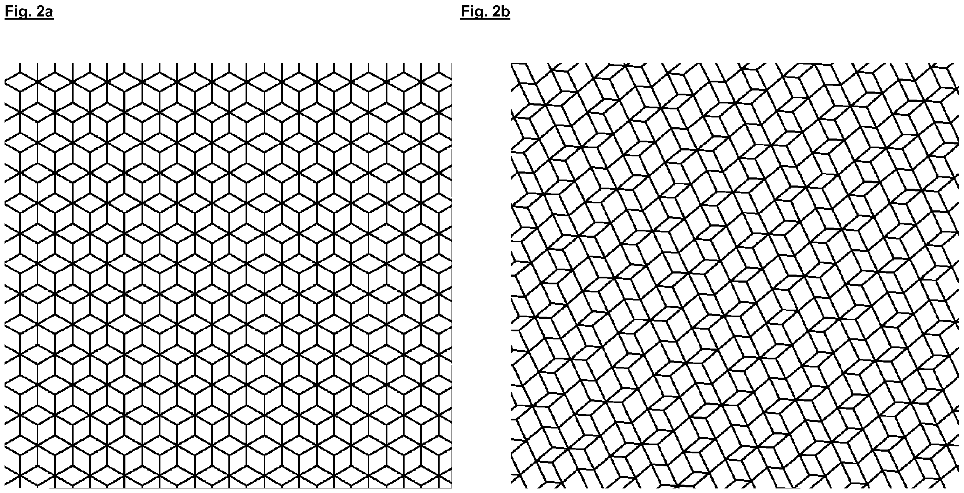

**Fig. 2a** shows a 3-dimensional cubic lattice, projected onto a plane which is orthogonal to the body diagonal (1,1,1) of the cubic lattice. A regular, periodic tiling is obtained, because the chosen plane, defined by the vectors z1 and z2, is commensurate with the base vectors (u, v, w) of the cubic lattice, e.g. z1 = u-v; z2 = u-w.

**Fig. 2b** shows the same 3-dimensional cubic lattice projected onto a non-commensurate plane. The three square faces of the cubic elementary cell are seen under different projection angles, and the "staircase" obtained is non-periodic.

In **Fig. 2a**, **and 2b**, three different series of projections of squares are obtained, corresponding to the three possible scanning directions in the 3-dimensional hyper-space, according to the theory outlined above:
(u = odd-half-integer; v = odd-half-integer; w)
(u = odd-half-integer; v; w = odd-half-integer)
(u; v = odd-half-integer; w = odd-half-integer)

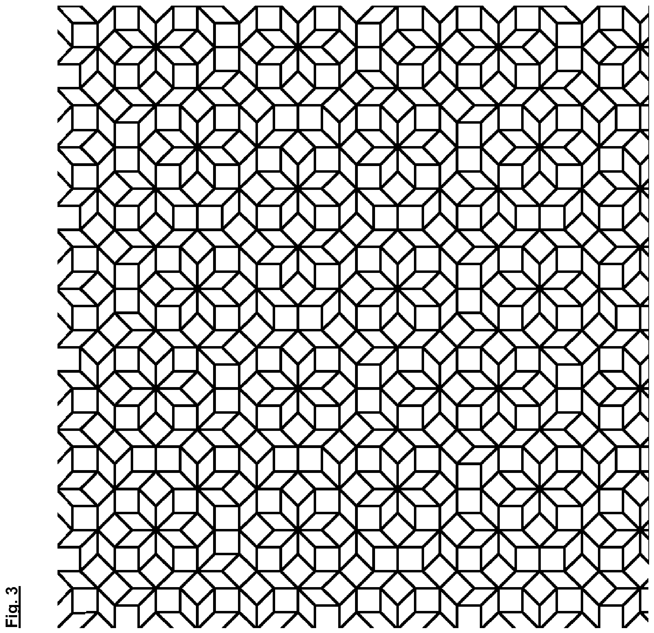

**Fig. 3** shows a particular projection of a 4-dimensional cubic hyper-lattice onto a plane. The resulting tiling is non-periodic and known as the "Amman-Beenker tiling". Given the particular projection, the tiling consists merely of two types of tiles, a square in two different orientations, and a rhombus in four different orientations, making up for totally six different projections.

The scanning of the 4D-coordinates (u, v, w, x) results in this case in 6 different series, corresponding to the said 6 different projections of squares (OHI standing for odd-half-integer):
(u = OHI; v = OHI; w; x)
(u = OHI; v; w = OHI; x)
(u = OHI; v; w; x = OHI)
(u; v = OHI; w = OHI; x)
(u; v = OHI; w; x = OHI)
(u; v; w = OHI; x = OHI)

**Fig. 4** shows the projection of a 5-dimensional cubic hyper-lattice onto a plane which is orthogonal to a fife-fold rotation axis body diagonal (1,1,1,1,1) of the hypercube. The resulting tiling is non-periodic and known as the "Penrose tiling". Certain tiles are marked in black to illustrate the five-fold symmetry of the tiling.

The tiling consists merely of two types of tiles, a "kite" (K) and a "diamond" (D), known as the "Penrose Rhombs", each in five different orientations, together making up for ten different projections of a square of the 5D-hypercubic unit cell onto the plane.

The scanning of the 5D-coordinates (u, v, w, x, y) in fact results in this case in 10 different series, corresponding to the said 10 different projections of squares (OHI standing for odd-half-integer):
(u = OHI; v = OHI; w; x; y)
(u = OHI; v; w = OHI; x; y)
(u = OHI; v; w; x = OHI; y)
(u = OHI; v; w; x; y = OHI)
(u; v = OHI; w = OHI; x; y)
(u; v = OHI; w; x = OHI; y)
(u; v = OHI; w; x;y = OHI)
(u; v; w = OHI; x = OHI; y)
(u; v; w = OHI; x; y = OHI)
(u; v; w; x = OHI; y = OHI)

Any so obtained primary tiling may then, respecting its symmetries, be further modified by subdividing tiles, uniting tiles, as well as making ornamental additions to tiles, such as inserting figures, indicia, or coloring the tiles, e.g. according to the projection series to which they belong.

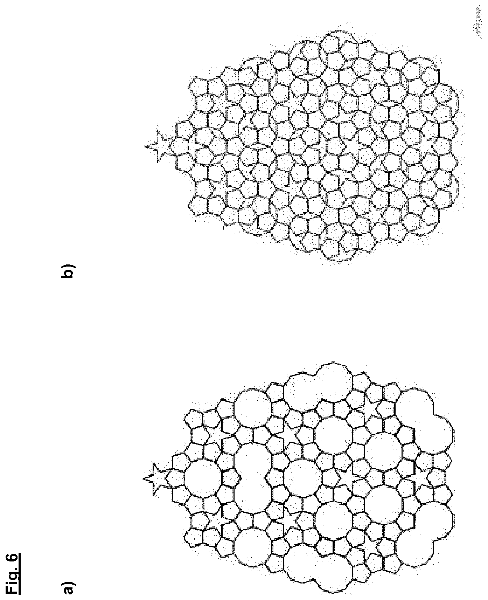

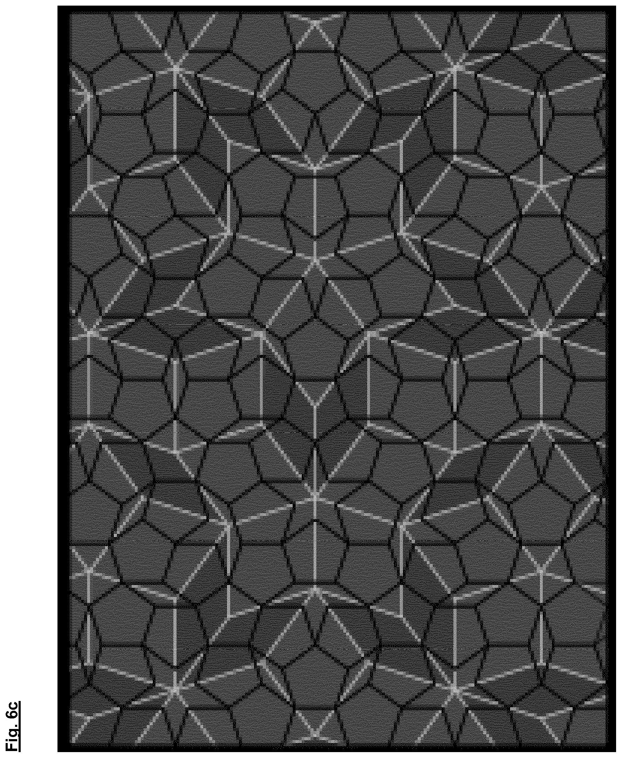

**Fig. 6a** illustrates the Kepler tiling, first published by Johannes Kepler in his 1619 work Harmonices Mundi*.* The Kepler tiling, as well as the Kepler-Penrose tiling given in **Fig.** 6b, can be obtained from the Penrose tiling by modifying, uniting and subdividing tiles. **Fig.** 6c illustrates the equivalence of the original tiling proposed by Roger Penrose (black lines) with the "Kite" and "Diamond" Penrose tiling, from which it can be obtained by subdividing and reassembly of tiles. Such subdividing tiles, uniting tiles, as well as making ornamental additions to tiles of the tiling, such as inserting figures, indicia, etc., apart from the esthetic appeal it provides, can be used to confer an additional level of security to the document herewith protected.

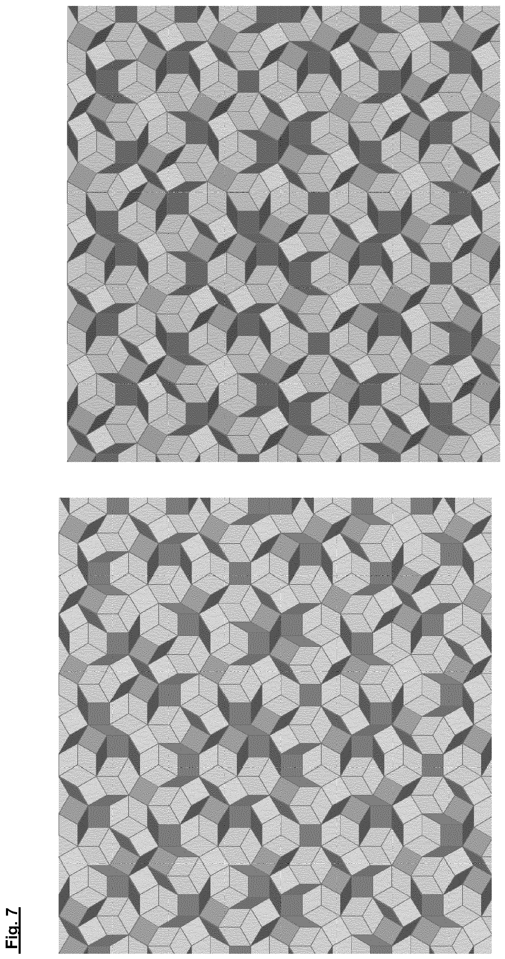

**Fig. 7** illustrates the coloring of tiles. In this tiling, obtained by the projection of a 6-dimensional hyper-cubic lattice onto a plane, each projected square is colored according to the projection series to which it belongs. Such coloring of tiles of the tiling, apart from the esthetic appeal it provides, can be used to confer an additional level of security to the document herewith protected.

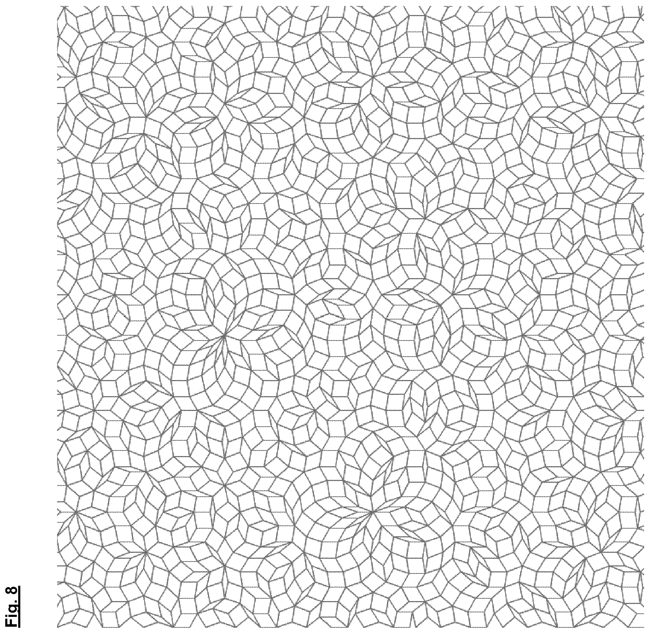

**Fig. 8** illustrates the extreme complexity which is obtainable in tiling a plane by projection of a lattice from a high-dimensional space. In this tiling, obtained by the projection of a 9-dimensional hyper-cubic lattice onto a plane, 36 different projections of a square are involved. Such complexity of the tiling, apart from the esthetic appeal it provides, can be used to confer an additional level of security to the document herewith protected.

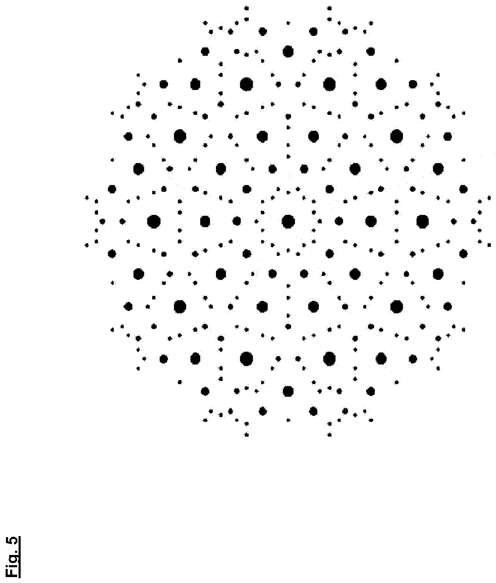

**Fig. 5** illustrates the spectral density (intensity) Fourier Transform of a Penrose tiling, illustrating its discrete points in the plane, arranged according to a tenfold rotational symmetry.

The Fourier Transform may be used, according to the present invention, to automatically recognize on a machine the presence and location of a pseudo-crystalline tiling on a document in question. If t is a pseudo-crystalline tiling of the plane and q is a document comprising said tiling t; then r = FT⁻¹(T*Q) is a correlation map, which shows where the Penrose tiling is present on the document, wherein
FT means the Fourier Transform; FT⁻¹ the inverse Fourier Transform;
T = FT(-t) is the Fourier Transform of the reverse of t;
Q = FT(q) is the Fourier Transform of q; and
-t, the reverse of t, means the point-mirror reverse of t; and wherein
the quantities T, Q, and R are complex 2D arrays, and T*Q is a complex product; and
the quantities t, q, and r are real 2D arrays.

The autocorrelation map u of q is correspondingly obtained as u = FT⁻¹(FT(q)*FT(-q)), wherein -q, the reverse of q, means the point-mirror reverse.

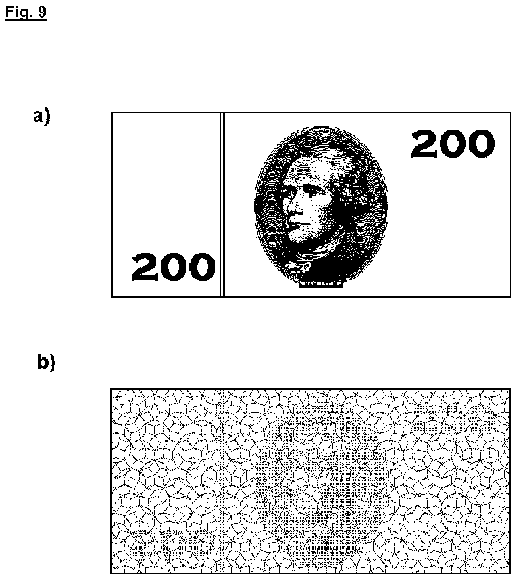

To protect a security document with a machine-readable non-periodic tiling, this latter can e.g. be overprinted in the form of the tiling with an invisible ink, comprising a material with the property of hidden luminescence. **Fig. 9a** schematically shows a banknote which is overprinted with an invisible, IR-luminescent Penrose tiling, after completion of the Intaglio printing and prior to over-varnishing the banknote's surface. A banknote paper carrying an intaglio imprinting is screen-overprinted with a Penrose tiling, using a UV-curable screen-printing ink of the following formula:

| **Ingredient** | **Formula wt-%** |
|---|---|
| Epoxyacrylate oligomer (Sartomer CN118) | 50 |
| Trimethylolpropane triacrylate monomer | 15 |
| Tripropyleneglycol diacrylate monomer | 15 |
| Thickener Aerosil 200 (Evonik) | 2 |
| Stabilizer (Genorad 16,Rahn) | 1 |
| Initiator (Irgacure 500, CIBA) | 8 |
| Initiator (Genocure EPD,Rahn) | 3 |
| IR-luminescent LUMILUX® IR-CD 139 (Honeywell) | 6 |
| **Total** | **100** |

| | |
|---|---|
| The weight-percent (wt-%) being based on the total weight of the ink. | |

After UV-curing, a final protection varnish is applied to the banknote and cured.

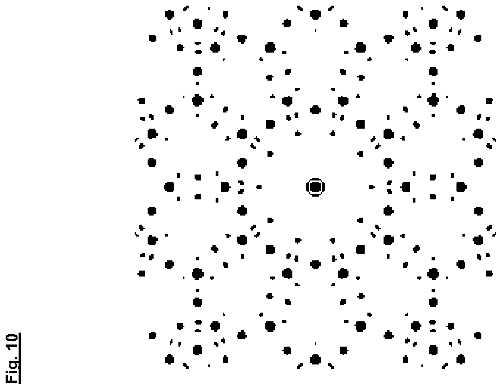

The IR luminescent on the base of YVO₄:Nd is exciteable with short-wave UV (300 nm) or with visible light in the 500nm to 600nm spectral range, and emits IR light at 880nm and 1060nm wavelength. The emissions wavelengths are in the sensitivity range of silicon photo-detectors, and thus suitable for detection with a silicon CCD or CMOS camera. **Fig. 9b****)** shows the recorded luminescence response of said Penrose tiling under excitation of said IR-luminescent with visible light; **Fig. 10** shows a Fourier Transform of the IR-luminescent Penrose tiling of the banknote shown in **Fig. 9****.**

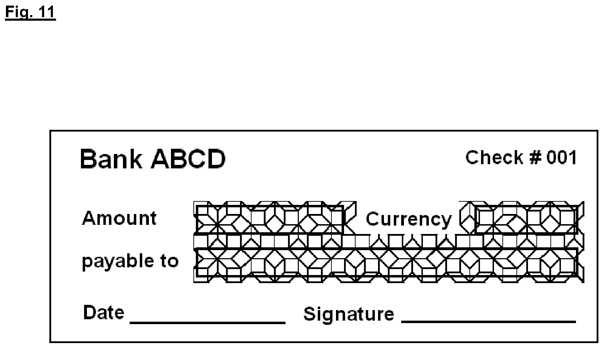

**Fig. 11** schematically shows a bank check having two sensible information fields overprinted with a non-periodic Ammann-Beenker tiling.

The non-periodic tiling may also be embodied using other document security means. Document security means, in the context of the present disclosure, shall comprise any machine-readable material-based or material-implemented feature used in the production of security documents, such as the application of watermarks, UV/Vis/IR light absorbing compounds or particles, UV/Vis/IR luminescent compounds or particles, magnetic particles, etc.

## Claims

1. A security element comprising, as an authentication and forgery-protection means, a 2-dimensional non-periodic, quasi-crystalline tiling, said tiling being embodied in the form of a material or a material modification in or on said element, wherein the term "quasi-crystalline" means that the 2-dimensional tiling has internal symmetry elements, such as rotational symmetry and/or mirror symmetry, but lacks translational symmetry, i.e. that it is non-periodic at least along one dimension.

2. The security element according to claim 1, wherein said material modification in or on said document is selected from the group consisting of thickness variations, transparency variations, laser markings, laser perforations and combinations thereof.

3. The security element according to claim 1, wherein said material in or on said document is a layer made of an ink or a coating composition comprising a binder and one or more components selected the group consisting of UV-, visible-, and IR-absorbing materials; UV-, visible-, and IR-luminescent luminescent materials; ferromagnetic materials, ferrimagnetic materials and combinations thereof.

4. A use of the security element recited in any one of claims 1 to 3 as an authentication and forgery-protection means for a document.

5. A document comprising the security element recited in any one of claims 1 to 3.

6. The document according to claim 5, wherein said document is a value document selected from the group consisting of banknotes, identity documents, driving licenses, credit cards, access cards, public transportation titles and bank checks, or wherein said document is a value commercial good.

7. The document according to claim 5 or 6, wherein said 2-dimensional non-periodic, quasi-crystalline tiling is present at or over one or more locations carrying sensitive or personalization information.

8. The document according to claim 7, wherein said sensitive or personalization information is selected from the group consisting of biometric and/or other identity information, conferred rights, validity dates or periods, amounts of money, titulars of a title and combinations thereof.

9. The document according to claim 7 or 8, wherein said sensitive personalization information is modulated with said 2-dimensional, non-periodic, quasi-crystalline tiling.

10. A method for protecting a document against forgery, comprising a step of embodying a 2-dimensional non-periodic, quasi-crystalline tiling, in the form of a material or a material modification in or on a security element comprised by said document, wherein the term "quasi-crystalline" means that the 2-dimensional tiling has internal symmetry elements, such as rotational symmetry and/or mirror symmetry, but lacks translational symmetry, i.e. that it is non-periodic at least along one dimension.

11. The method according to claim 10, wherein said 2-dimensional non-periodic, quasi-crystalline tiling is applied to the security element by a printing process selected from the group consisting of offset-printing, gravure-printing, silkscreen-printing, copperplate intaglio printing, letterpress printing, roller-coating, ink-jet printing and combinations thereof.

12. The method according to claim 10, wherein said 2-dimensional non-periodic, quasi-crystalline tiling is embodied in or on said security element as a material modification selected from the group consisting of thickness variations, transparency variations, laser markings, laser perforations and combinations thereof.

13. The method according to one of claims 9 to 11, wherein said method further comprises a step of preparing a pre-press form of said tiling.

14. A method for authenticating a document carrying a 2-dimensional non-periodic, quasi-crystalline tiling as an authenticating feature, wherein the term "quasi-crystalline" means that the 2-dimensional tiling has internal symmetry elements, such as rotational symmetry and/or mirror symmetry, but lacks translational symmetry, i.e. that it is non-periodic at least along one dimension, said method comprising a step of calculating the Fourier Transform of an acquired image of said document or article and comparing the discrete parts of said Fourier Transform with the discrete Fourier Transform of a 2-dimensional non-periodic, quasi-crystalline tiling serving as the authenticating feature, hereby deriving an authenticity indication.

## Patentansprüche

1. Sicherheitselement, umfassend, als ein Authentisierungs- und Fälschungsschutzmittel, eine zweidimensionale nichtperiodische, quasi-kristalline Kachelung, wobei die Kachelung in der Form eines Materials oder einer Materialmodifikation in oder an dem Element ausgestaltet ist, wobei der Ausdruck "quasi-kristallin" bedeutet, dass die zweidimensionale Kachelung interne Symmetrieelemente wie etwa Rotationssymmetrie und/oder Spiegelsymmetrie besitzt, aber keine Translationssymmetrie aufweist, das heißt, dass sie entlang mindestens einer Dimension nichtperiodisch ist.

2. Sicherheitselement nach Anspruch 1, wobei die Materialmodifikation in oder an dem Dokument ausgewählt ist aus der Gruppe bestehend aus Dickenvariationen, Transparenzvariationen, Lasermarkierungen, Laserperforationen und Kombinationen davon.

3. Sicherheitselement nach Anspruch 1, wobei das Material in oder an dem Dokument eine Schicht ist aus einer Druckfarbe oder einer Beschichtungszusammensetzung, umfassend ein Bindemittel und eine oder mehrere Komponenten ausgewählt aus der Gruppe bestehend aus im UV-, sichtbaren und IR-Bereich absorbierenden Materialien; im UV-, sichtbaren und IR-Bereich lumineszierenden Lumineszenzmaterialien; ferromagnetischen Materialien, ferrimagnetischen Materialien und Kombinationen davon.

4. Verwendung des Sicherheitselements nach einem der Ansprüche 1 bis 3 als ein Authentisierungs- und Fälschungsschutzmittel für ein Dokument.

5. Dokument, umfassend das Sicherheitselement nach einem der Ansprüche 1 bis 3.

6. Dokument nach Anspruch 5, wobei das Dokument ein Wertdokument ist ausgewählt aus der Gruppe bestehend aus Banknoten, Identitätsdokumenten, Führerscheinen, Kreditkarten, Zugangskarten, Berechtigungen für öffentliche Verkehrsmittel und Bankschecks, oder wobei das Dokument ein kommerzielles Wertgut ist.

7. Dokument nach Anspruch 5 oder 6, wobei die zweidimensionale nichtperiodische, quasi-kristalline Kachelung an oder über einer oder mehreren Stellen vorliegt, die sensible Informationen oder Personalisierungsinformationen tragen.

8. Dokument nach Anspruch 7, wobei die sensiblen oder Personalisierungsinformationen ausgewählt sind aus der Gruppe bestehend aus biometrischen und/oder anderen Identitätsinformationen, übertragenen Rechten, Gültigkeitsdaten oder -perioden, Wertmengen, Titelträgern eines Titels und Kombinationen davon.

9. Dokument nach Anspruch 7 oder 8, wobei die sensiblen Personalisierungsinformationen mit der zweidimensionalen, nichtperiodischen, quasi-kristallinen Kachelung moduliert sind.

10. Verfahren zum Schützen eines Dokuments vor Fälschung, umfassend einen Schritt der Ausgestaltung einer zweidimensionalen nichtperiodischen, quasi-kristallinen Kachelung, in der Form eines Materials oder einer Materialmodifikation in oder an einem von dem Dokument umfassten Sicherheitselement, wobei der Ausdruck "quasi-kristallin" bedeutet, dass die zweidimensionale Kachelung interne Symmetrieelemente wie etwa Rotationssymmetrie und/oder Spiegelsymmetrie besitzt, aber keine Translationssymmetrie aufweist, das heißt, dass sie entlang mindestens einer Dimension nichtperiodisch ist.

11. Verfahren nach Anspruch 10, wobei die zweidimensionale nichtperiodische, quasi-kristalline Kachelung auf das Sicherheitselement durch einen Druckprozess aufgebracht wird ausgewählt aus der Gruppe bestehend aus Offsetdruck, Tiefdruck, Siebdruck, Kupferplatten-Stichtiefdruck, Buchdruck, Walzenauftrag, Tintenstrahldruck und Kombinationen davon.

12. Verfahren nach Anspruch 10, wobei die zweidimensionale nichtperiodische, quasi-kristalline Kachelung in oder an dem Sicherheitselement als eine Materialmodifikation ausgestaltet ist ausgewählt aus der Gruppe bestehend aus Dickenvariationen, Transparenzvariationen, Lasermarkierungen, Laserperforationen und Kombinationen davon.

13. Verfahren nach einem der Ansprüche 9 bis 11, wobei das Verfahren weiterhin einen Schritt des Vorbereitens einer Druckvorstufenform der Kachelung umfasst.

14. Verfahren zum Authentisieren eines Dokuments, das eine zweidimensionale nichtperiodische, quasi-kristalline Kachelung als ein authentisierendes Merkmal trägt, wobei der Ausdruck "quasi-kristallin" bedeutet, dass die zweidimensionale Kachelung interne Symmetrieelemente wie etwa Rotationssymmetrie und/oder Spiegelsymmetrie besitzt, aber keine Translationssymmetrie aufweist, das heißt, dass sie entlang mindestens einer Dimension nichtperiodisch ist, wobei das Verfahren einen Schritt des Berechnens der Fourier-Transformation eines erfassten Bilds des Dokuments oder Artikels und Vergleichens der diskreten Teile der Fourier-Transformation mit der diskreten Fourier-Transformation einer zweidimensionalen nichtperiodischen, quasi-kristallinen Kachelung, die als das authentisierende Merkmal dient, umfasst, wodurch eine Authentizitätsanzeige abgeleitet wird.

## Revendications

1. Élément de sécurité comprenant, en tant que moyen d'authentification et de protection contre la contrefaçon, un carrelage bidimensionnel non périodique quasi-cristallin, ledit carrelage étant incorporé sous la forme d'un matériau ou d'une modification de matériau dans ou sur ledit élément, où le terme « quasi-cristallin » signifie que le carrelage bidimensionnel comporte des éléments de symétrie interne, comme une symétrie de révolution et/ou une symétrie spéculaire, mais qu'il est dépourvu de symétrie en translation, c'est-à-dire qu'il est non périodique suivant au moins une dimension.

2. Élément de sécurité selon la revendication 1, dans lequel ladite modification de matériau dans ou sur ledit document est choisie dans le groupe constitué de variations d'épaisseur, de variations de transparence, de marquages au laser, de perforations au laser et de combinaisons de ceux-ci.

3. Élément de sécurité selon la revendication 1, dans lequel ledit matériau dans ou sur ledit document est une couche constituée d'une encre ou d'une composition de revêtement comprenant un liant et un ou plusieurs constituants choisis dans le groupe constitué de matériaux absorbant dans l'UV, la lumière visible et l'IR ; de matériaux luminescents luminescents dans l'UV, la lumière visible et l'IR ; de matériaux ferromagnétiques, de matériaux ferrimagnétiques et de combinaisons de ceux-ci.

4. Utilisation de l'élément de sécurité selon l'une quelconque des revendications 1 à 3 en tant que moyen d'authentification et de protection contre la contrefaçon pour un document.

5. Document comprenant l'élément de sécurité selon l'une quelconque des revendications 1 à 3.

6. Document selon la revendication 5, ledit document étant un document de valeur choisi dans le groupe constitué de billets de banque, documents d'identité, permis de conduire, cartes de crédit, cartes d'accès, titres de transport public et chèques bancaires, ou ledit document étant un bien commercial de valeur.

7. Document selon la revendication 5 ou 6, dans lequel ledit carrelage bidimensionnel non périodique quasi-cristallin est présent au niveau de, ou sur un ou plusieurs emplacements portant des informations sensibles ou de personnalisation.

8. Document selon la revendication 7, dans lequel lesdites informations sensibles ou de personnalisation sont choisies dans le groupe constitué d'informations d'identité biométriques et/ou autres, de droits conférés, de dates ou périodes de validité, de quantités d'argent, de titulaires d'un titre et de combinaisons de celles-ci.

9. Document selon la revendication 7 ou 8, dans lequel lesdites informations de personnalisation sensibles sont modulées au moyen dudit carrelage bidimensionnel non périodique quasi-cristallin.

10. Procédé de protection d'un document contre la contrefaçon, comprenant une étape consistant à incorporer un carrelage bidimensionnel non périodique quasi-cristallin, sous la forme d'un matériau ou d'une modification de matériau dans ou sur un élément de sécurité compris dans ledit document, où le terme « quasi-cristallin » signifie que le carrelage bidimensionnel comporte des éléments de symétrie interne, comme une symétrie de révolution et/ou une symétrie spéculaire, mais qu'il est dépourvu de symétrie en translation, c'est-à-dire qu'il est non périodique suivant au moins une dimension.

11. Procédé selon la revendication 10, dans lequel ledit carrelage bidimensionnel non périodique quasi-cristallin est appliqué à l'élément de sécurité par un procédé d'impression choisi dans le groupe constitué de l'impression offset, l'impression par gravure, l'impression par sérigraphie, l'impression par gravure taille-douce, l'impression par typographie, le revêtement au rouleau, l'impression par jet d'encre et de combinaisons de ceux-ci.

12. Procédé selon la revendication 10, dans lequel ledit carrelage bidimensionnel non périodique quasi-cristallin est incorporé dans ou sur ledit élément de sécurité sous la forme d'une modification de matériau choisie dans le groupe constitué de variations d'épaisseur, de variations de transparence, de marquages au laser, de perforations au laser et de combinaisons de ceux-ci.

13. Procédé selon l'une des revendications 9 à 11, ledit procédé comprenant en outre une étape consistant à préparer une forme de prépresse dudit carrelage.

14. Procédé d'authentification d'un document portant un carrelage bidimensionnel non périodique quasi-cristallin en tant que caractéristique d'authentification, où le terme « quasi-cristallin » signifie que le carrelage bidimensionnel comporte des éléments de symétrie interne, comme une symétrie de révolution et/ou une symétrie spéculaire, mais qu'il est dépourvu de symétrie en translation, c'est-à-dire qu'il est non périodique suivant au moins une dimension, ledit procédé comprenant une étape consistant à calculer la transformée de Fourier d'une image acquise dudit document ou article et à comparer les parties discrètes de ladite transformée de Fourier avec la transformée de Fourier discrète d'un carrelage bidimensionnel non périodique quasi-cristallin servant de caractéristique d'authentification, pour en déduire une indication d'authenticité.
